# EUROPEAN PATENT SPECIFICATION

(11) **EP 3 409 572 B1**
(45) Date of publication and mention of the grant of the patent: **25.11.2020**
(21) Application number: 18175642.0
(22) Date of filing: 01.06.2018
(51) Int. Cl.: B62K 23/08, B62L 3/04, B62M 25/06, B62J 25/06

(54) **ADJUSTABLE PEDAL OR FOOT REST**
ANPASSBARES PEDAL ODER FUSSSTUETZE
PÉDALE OU REPOSE-PIEDS RÉGLABLE

(30) Priority: 02.06.2017 GB 201708801
(43) Date of publication of application: 05.12.2018
(73) Proprietor: Triumph Designs Limited, Hinckley, Leicestershire LE10 3BZ (GB)
(72) Inventor: JASELSKIS, Arvydas, Leicester LE3 3DL (GB)
(74) Representative: Lind, Robert

(56) References cited:
- DE-C- 484 952
- FR-A- 1 062 222
- JP-U- H0 516 572
- JP-U- S6 061 994

## Description

### Field of the Invention

The present invention relates to an adjustable pedal for use on a motorcycle.

### Background

Bike riders come in a variety of shapes and sizes. This means that ergonomics of any mass production bike may have to be compromised to suit more than one person. Dual purpose bikes may need to be compromised further to accommodate a variety of riding scenarios: on-road, off-road, off-road standing up, etc. Therefore, to satisfy multiple requirements, it is advantageous to utilise adjustable foot and hand controls. In this regard foot pedals may be considered to include brake pedals, gear change pedals or simple foot rests.

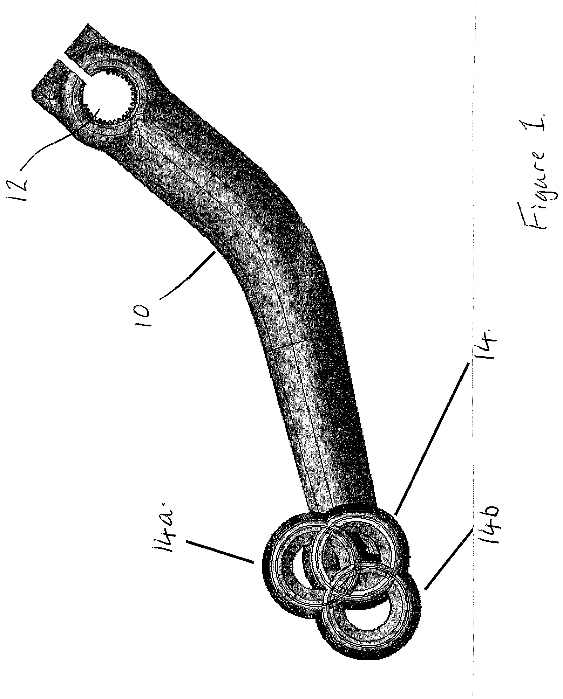

Typically motorcycle brake pedals comprise a lever pivotally attached to the motorcycle and a foot-peg (hereafter referred to just as a peg) attached to the lever, which is pushed down by the rider's foot to actuate the brake. Figure 1 shows a lever 10 of a known brake pedal assembly. Lever 10 is pivotally mounted to a motorcycle (not shown) by way of a splined attachment 12. A peg 14 is mounted to the lever 10 at a position for enabling a rider to actuate the brake by pressing down on the peg 14. The peg 14 is fixed to the lever 10 at the position shown, and is not adjustable relative to the lever. Also shown in Figure 1 is the position of a peg 14a that would be ideal for one mode of riding, and the position of another peg 14b at a position that would be ideal for another mode of riding. Accordingly the position of peg 14 is set so as to be a compromise between the two ideals, and is not itself ideal for either mode of riding. Similar compromises are often found with other foot pedals, e.g. gear change pedals or foot rests. A foot rest would typically be mounted to a member that is part of or rigidly attached to a motorcycle frame, rather than to a moveable lever.

Motorcycle pedals are known that have adjustable peg positions to vary the height and/or distance of the peg relative to the lever pivot. For example a rod connected to the lever may have an adjustable length. Similarly, a non-directly acting gear lever linkage length may be adjustable for changing peg height in relation to the rider's foot.

Alternatively, lever angle may be adjustable - for example a directly acting lever may be mounted on a splined shaft so as to be rotatable by one or more spline teeth to change peg height.

Broadly speaking, known adjustments may involve using tools - e.g. use of a slider to enable adjustment of distance between peg and lever pivot axis, or multiple pre-drilled holes to enable mounting of the peg at different locations on the lever, or use of an off-centre boss retained by a pinch bolt, which when slackened can be rotated to change height and/or distance between peg and lever pivot axis - or may be without use of tools - e.g. use of a pull and flip lever as a way of quickly adjusting lever height in relation to the ground, or use of a spring loaded peg having different offsets on opposing peg faces.

In addition, it is known to have folding components, in case they hit a stationary object. Folding foot-pegs are commonly employed on motorcycles. These have advantages over solid pedal assemblies, including a reduced likelihood of causing plastic deformation to the pedal, and a reduced impact load transferred through the pedal. Note that the peg assembly must not fold in the same direction as it is pressed to operate a brake or gear change.

However, a problem arises when trying to provide more than one of the above functions on a single pedal, without increasing assembly and material costs.

The present invention has been conceived with the foregoing in mind.

JPS6061994U discloses an adjustable motorcycle pedal according to the preamble of claim

FR1062222A discloses a footrest being articulated at the end of a slider outside a housing, so that it is sufficient to push fully the folding movement of the footrest to release a slide and thus allow height adjustment of the footrest along a fixed rod. DE484952C discloses a pawl arranged so that it intervenes on a correct position of a footrest in the position of use with a nose in openings of the rail and causes the determination of the footrest. Any loosening of screws and carrying of the appropriate key is not necessary.

### Summary

According to the present invention there is provided an adjustable motorcycle pedal according to claim 1, comprising: a member attachable to the motorcycle; and a peg attached to the member. The peg is moveable between a first position in which the peg extends from the member in a first direction and is anchored to the member in a manner suitable for a rider's foot to rest on the peg, and a second position in which the peg extends from the member in a second direction and is moveable to adjust the height of the peg relative to the member when the peg is returned to the first position.

In examples, the peg height is adjustable by rotation of the peg.

It is an advantage that the motorcycle pedal combines the functions of a folding peg design and an adjustable peg height. In addition, the peg height can be quickly and easily adjusted without the use of tools by means of a simple rotation of the peg.

The pedal may be used to actuate a control function and the member may be a lever configured to be moved by the rider's foot to actuate the control function. The pedal may be a brake pedal. The pedal may be a gear change pedal. Alternatively, the pedal may be a foot rest.

The peg is moveable between the first position and the second position by pivotal movement of the peg relative to the member. The peg is attached to the member through an aperture, the aperture being shaped to allow the peg to be pivoted to move from the first position to the second position. The peg is attached by a pivot bolt that extends through the aperture, the bolt having a bolt axis, and the aperture being shaped to permit pivotal movement of the bolt about an axis perpendicular to the bolt axis for moving the peg between the first and second positions, rotational movement of the bolt about the bolt axis facilitating adjustment of the height of the peg.

The member may further comprise a keyway adjacent to the aperture, the keyway receiving a protrusion attached to the peg, and wherein the keyway is shaped to prevent rotation of the peg when the peg is in the first position and to allow rotation of the peg when the peg is in the second position.

It is an advantage that the use of the keyway and anti-rotation block ensures that the peg can only be adjusted (rotated) when it is in the second position. This also ensures that the pedal performs like a solid lever and peg pedal during normal operating conditions.

The second direction may be at an angle to the first direction of between 20° and 70°, or preferably at an angle of between 30° and 60°, more preferably at an angle of between 40° and 50°, and most preferably at an angle of 45°.

Preferably movement of the peg from the first position to the second position is in a different direction to movement of the lever to actuate the control function.

The adjustable brake pedal may further comprise a spring urging the peg into the first position. It is an advantage that the spring maintains the peg firmly pressed into its normal position.

### Brief Description of the Drawings

Figure 1 shows a known brake pedal lever with different positions for a foot-peg.
Figures 2a and 2b show part of a brake pedal lever with an attached peg with adjustable height in accordance with an embodiment.
Figure 3 shows a cross-section through the peg of Figures 2a and 2b.
Figure 4 shows the part of the brake pedal lever with attached peg of Figures 2a and 2b, with the peg in a folded position.
Figure 5 shows detail of an aperture receiving a bolt for attaching the peg to the brake pedal lever of the embodiment of Figures 2a, 2b, 3 and 4.
Figure 6 shows part of the lever and aperture of Figure 5, without an attached peg and showing an associated keyway.
Figure 7 shows an anti-rotation block forming part of the brake pedal embodiment of Figures 2a, 2b and 3 to 6.

### Detailed Description

The embodiments described below are in relation to a brake pedal. However, it should be appreciated that the principles described may be employed in relation to any motorcycle foot pedal, including, but not necessarily limited to brake pedals, gear change pedals or foot rests.

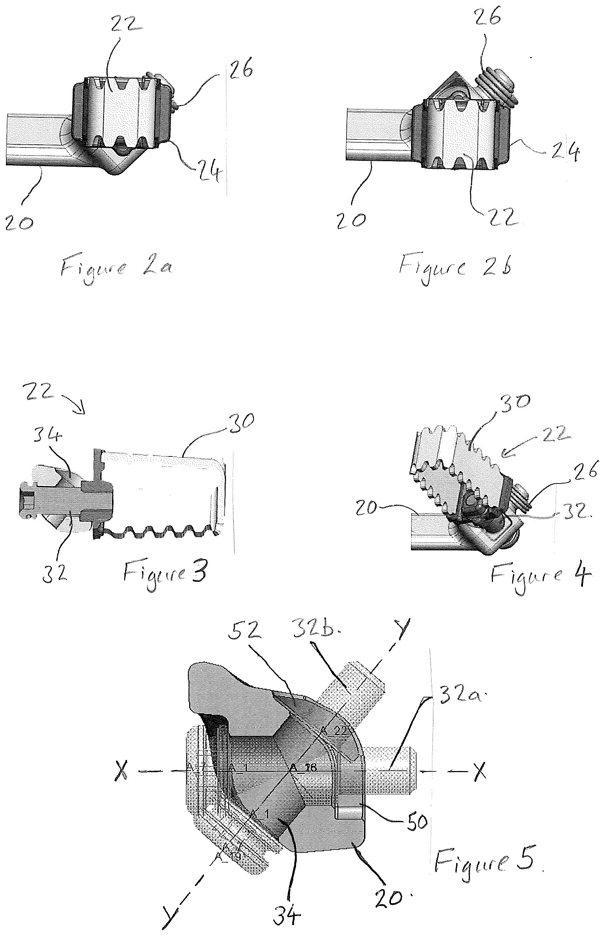

Referring to Figures 2a and 2b, Figure 2a shows part of a brake pedal assembly in accordance with an embodiment of the invention, with a lever 20 having a foot-peg 22 mounted in a first, higher position relative to the lever 20. Figure 2b shows the same part of the brake pedal assembly as Figure 2a, but with the peg 22 mounted at a second, lower position. As will be described further below, the position of the peg 22 can be changed quickly and without use of tools by means of a gripping and flipping action. As shown in Figures 2a and 2b, the peg 22 extends substantially perpendicular to the lever 20 (i.e. out of the page), in what will be referred to as the first or normal position of the peg.

Also partially visible in Figures 2a and 2b are an anti-rotation block 24 and a spring 26.

Figure 3 shows a cross-section of the peg 22 of Figures 2a and 2b. The peg 22 includes a U-shaped castellated strip 30 (typically formed of a metal such as steel), which is attached to and extends from a cylindrical bolt portion 32. The bolt portion 32 is attached at a position such that one side of the castellated strip 30 is further from the axis of the bolt 32 than the other side. The cylindrical bolt portion 32 passes through a shaped aperture 34 in a part of the lever 20. The shaped aperture 34 allows the bolt 32 to pivot through an angle relative to the lever 20. This is shown in Figure 4 with the peg 22 folded back at an angle to the lever 20. In the depicted embodiment the angle is about 45°. In this folded, or second, position, the peg 22 can be rotated about the axis of the bolt. Rotation of the peg 22 through 180° and then returning the peg to the first or normal position will mean that the top and bottom surfaces of the peg 20 have been reversed so as to change the height of the peg (i.e. to change from the position shown in Figure 2a to that of Figure 2b, or vice versa). It will be appreciated that the angle between the peg and the lever when the peg is folded need not be 45° but may be any suitable angle such as any angle between 20° and 70°, or preferably between 30° and 60° degrees, more preferably between 40° and 50°.

The spring 26 shown in Figures 2a, 2b and 4 urges the peg 22 into the first, normal position. Accordingly, to change the height of the peg 22 relative to the lever 20, a user simply pushes the peg against the action of the spring into the second, folded position, rotates the peg through 180° and releases it so that the spring urges the peg 22 back to the normal position but with its top and bottom surfaces reversed.

It will be appreciated that the peg 22 is adjustable to two different heights, but that pegs may be provided that have more than two heights. For example a peg may have a triangular shape with three surfaces each at a different spacing from the bolt axis, and such that the peg may be rotated through two different angles to obtain a total of three different peg heights. The same principle may be extended to pegs having four or more different heights.

Figure 5 shows more detail of the aperture 34 in the lever 20 and shows the bolt portion 32 of the peg 22 in each of the two positions - first or normal position 32a and second or folded position 32b. In the first position of the bolt 32a, it extends along an axis X-X, while in the second position of the bolt 32b it extends along axis Y-Y at an angle (e.g. 45°) to axis X-X. The shape of the aperture 34 allows the bolt 32 to pivot around an axis orthogonal to the axes X-X and Y-Y intersecting them at the point where the axes cross. Also shown in Figure 5 is the profile of a keyway 50, 52 formed as a recess in a surface of the lever 20. The keyway has a first part 50 adjacent to the axis X-X of the bolt in the first position 32a, and a second part 52 adjacent to the axis Y-Y of the bolt in the second position 32b.

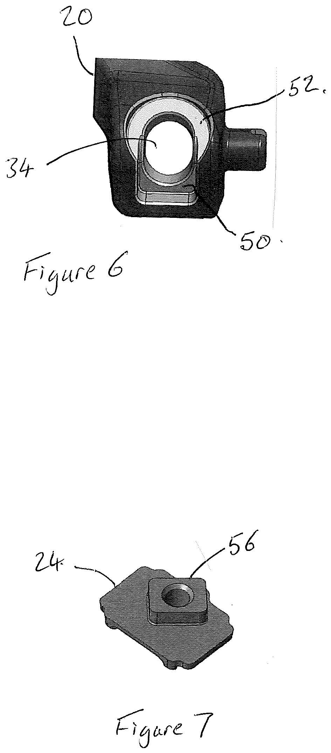

Figure 6 shows the keyway 50, 52 looking towards the aperture 34 in the lever 20 from the direction of the peg 22, but without the peg being present. The first part 50 of the keyway has a parallel-sided, or rectangular shape, while the second part 52 has a circular shape. The reason for this will be apparent from Figure 7, which shows the anti-rotation block 24 that is fixed to the peg 22, as shown in Figures 2a and 2b. The anti-rotation block 24 has a square (or rectangular) protrusion 56 sized to fit into the first, parallel-sided part of the keyway 50, when the peg 22 is in the first position. In this position the peg 22 cannot be rotated due to the presence of the protrusion 56 in the keyway 50. However, when the peg 22 is moved to the second position, such that the axis of the bolt 32 extends through the aperture 34 adjacent to the second part of the keyway 52, the circular shape of the second part of the keyway 52 no longer prevents the protrusion 56 from being rotated and so the peg 20 can be rotated to allow adjustment of the peg height as described above.

It will be apparent from the above that the brake pedal described provides numerous advantages over prior art designs. In particular the brake pedal combines the functions of a folding peg design and an adjustable peg height. In addition, the peg height can be quickly and easily adjusted without the use of tools by means of a simple flipping grip action. The use of the keyway and anti-rotation block ensures that the peg can only be adjusted (flipped) when it is in the maximum fold-up position. This also ensures that the lever performs like a solid lever and peg pedal during normal operating conditions and while the spring maintains the peg firmly pressed into its normal position. All of the above advantages may also apply to other types of motorcycle pedal, including gear change pedals and foot rests.

## Claims

1. An adjustable motorcycle pedal, comprising:
a member attachable to the motorcycle; and
a peg (22) attached to the member (20),
wherein the peg (22) is moveable between a first position in which the peg extends from the member (20) in a first direction and is anchored to the member (20) in a manner suitable for a rider's foot to rest on the peg (22), and a second position in which the peg (22) extends from the member in a second direction and is moveable to adjust the height of the peg (22) relative to the member (20) when the peg (22) is returned to the first position,
wherein the peg (22) is moveable between the first position and the second position by pivotal movement of the peg (22) relative to the member (20),
wherein the peg (22) is attached to the member (20) through an aperture (34), the aperture (34) being shaped to allow the peg (22) to be pivoted to move from the first position to the second position;
**characterised in that** the peg (22) is attached by a pivot bolt (32) that extends through the aperture (34), the bolt (32) having a bolt axis, and the aperture (34) is shaped to permit pivotal movement of the bolt (32) about an axis perpendicular to the bolt axis for moving the peg (22) between the first and second positions, rotational movement of the bolt (32) about the bolt axis facilitating adjustment of the height of the peg (22).

2. The adjustable motorcycle pedal of claim 1, wherein the peg height is adjustable by rotation of the peg.

3. The adjustable motorcycle pedal of claim 1 or claim 2, wherein the pedal is used to actuate a control function and the member (20) is a lever configured to be moved by the rider's foot to actuate the control function.

4. The adjustable motorcycle pedal of claim 3, wherein the pedal is a brake pedal.

5. The adjustable motorcycle pedal of claim 3 wherein the pedal is a gear change pedal.

6. The adjustable motorcycle pedal of claim 1 or claim 2, wherein the pedal is a foot rest.

7. The adjustable motorcycle pedal of claim 2 or any claim dependent on claim wherein the member (20) comprises a keyway adjacent to the aperture (34), the keyway (50, 52) receiving a protrusion (56) attached to the peg (22), and wherein the keyway is shaped to prevent rotation of the peg (22) when the peg (22) is in the first position and to allow rotation of the peg (22) when the peg (22) is in the second position.

8. The adjustable motorcycle pedal of any preceding claim, wherein the second direction is at an angle to the first direction of between 20 and 70 degrees, preferably at an angle of between 30 and 60 degrees, more preferably at an angle of between 40 and 50 degrees, and most preferably at an angle of 45 degrees.

9. The adjustable motorcycle pedal of any of claims 3 to 5, wherein movement of the peg (22) from the first position to the second position is in a different direction to movement of the lever (20) to actuate the control function.

10. The adjustable motorcycle pedal of any preceding claim, further comprising a spring (26) urging the peg (22) into the first position.

## Patentansprüche

1. Anpassbares Pedal für ein Motorrad, umfassend:
ein Element, welches an dem Motorrad befestigbar ist; und
eine Fußraste (22), welche an dem Element (20) befestigt ist,
wobei die Fußraste (22) zwischen einer ersten Position, in welcher die Fußraste sich von dem Element (20) in einer ersten Richtung erstreckt und an dem Element (20) derart verankert ist, dass der Fuß eines Fahrers auf der Fußraste (22) liegen kann, und einer zweiten Position beweglich ist, in welcher die Fußraste (22) sich von dem Element in einer zweiten Richtung erstreckt und beweglich ist, um die Höhe der Fußraste (22) relativ zu dem Element (20) anzupassen, wenn die Fußraste (22) in die erste Position zurückkehrt,
wobei die Fußraste (22) zwischen der ersten Position und der zweiten Position durch eine Schwenkbewegung der Fußraste (22) relativ zu dem Element (20) beweglich ist,
wobei die Fußraste (22) an dem Element (20) durch eine Öffnung (34) befestigt ist, wobei die Öffnung (34) derart geformt ist, dass sie eine Schwenkung der Fußraste (22) ermöglicht, damit diese von der ersten Position in die zweite Position beweglich ist;
**dadurch gekennzeichnet, dass** die Fußraste (22) durch einen Schwenkbolzen (32) befestigt ist, welcher sich durch die Öffnung (34) erstreckt, wobei der Bolzen (32) eine Bolzenachse aufweist, und die Öffnung (34) derart geformt ist, dass sie eine Schwenkbewegung des Bolzens (32) um eine Achse ermöglicht, welche zu der Bolzenachse senkrecht steht, um die Fußraste (22) zwischen der ersten und der zweiten Position zu bewegen, wobei eine Drehbewegung des Bolzens (32) um die Bolzenachse die Anpassung der Höhe der Fußraste (22) erleichtert.

2. Anpassbares Pedal für ein Motorrad nach Anspruch 1, wobei die Höhe der Fußraste durch Drehung der Fußraste anpassbar ist.

3. Anpassbares Pedal für ein Motorrad nach Anspruch 1 oder Anspruch 2, wobei das Pedal verwendet wird, um eine Steuerfunktion auszuführen und das Element (20) ein Hebel ist, welcher konfiguriert ist, um durch den Fuß des Fahrers bewegt zu werden, um die Steuerfunktion auszuführen.

4. Anpassbares Pedal für ein Motorrad nach Anspruch 3, wobei das Pedal ein Bremspedal ist.

5. Anpassbares Pedal für ein Motorrad nach Anspruch 3, wobei das Pedal ein Gangwechselpedal ist.

6. Anpassbares Pedal für ein Motorrad nach Anspruch 1 oder Anspruch 2, wobei das Pedal eine Fußstütze ist.

7. Anpassbares Pedal für ein Motorrad nach Anspruch 2 oder einem Anspruch abhängig von Anspruch 2, wobei das Element (20) eine Passfedernut umfasst, welche an die Öffnung (34) angrenzt, wobei die Passfedernut (50, 52) einen Vorsprung (56) aufnimmt, welcher an der Fußraste (22) befestigt ist, und wobei die Passfedernut geformt ist, um eine Drehung der Fußraste (22) zu verhindern, wenn die Fußraste (22) sich in der ersten Position befindet und um die Drehung der Fußraste (22) zu ermöglichen, wenn die Fußraste (22) sich in der zweiten Position befindet.

8. Anpassbares Pedal für ein Motorrad nach einem der vorhergehenden Ansprüche, wobei die zweite Richtung in einem Winkel zu der ersten Richtung steht, welcher zwischen 20 und 70 Grad liegt, bevorzugt in einem Winkel zwischen 30 und 60 Grad und bevorzugter in einem Winkel zwischen 40 und 50 Grad und am meisten bevorzugt in einem Winkel von 45 Grad.

9. Anpassbares Pedal für ein Motorrad nach einem der Ansprüche 3 bis 5, wobei eine Bewegung der Fußraste (22) von der ersten Position in die zweite Position in einer Richtung stattfindet, welche von der Bewegung des Hebels (20) zum Ausführen der Steuerfunktion unterschiedlich ist.

10. Anpassbares Pedal für ein Motorrad nach einem der vorhergehenden Ansprüche, ferner umfassend eine Feder (26), welche die Fußraste (22) in die erste Position drückt.

## Revendications

1. Pédale réglable pour motocycle, comprenant :
un élément qui peut être fixé au motocycle, et
un repose-pied (22) fixée audit élément (20) ;
dans laquelle le repose-pied (22) peut être déplacé entre une première position dans laquelle le repose-pied s'étend à partir de l'élément (20) dans une première direction et est ancré à l'élément (20) de telle façon que le pied d'un motocycliste peut reposer sur le repose-pied (22), et une deuxième position dans laquelle le repose-pied (22) s'étend à partir de l'élément dans une deuxième direction et peut être déplacé pour régler la hauteur du repose-pied (22) par rapport à l'élément (20) lorsque le repose-pied (22) revient dans la première position,
ledit repose-pied (22) pouvant être déplacé entre la première position et la deuxième position par un mouvement de pivotement du repose-pied (22) par rapport à l'élément (20),
ledit repose-pied (22) étant fixé à l'élément (20) à travers une ouverture (34), ladite ouverture (34) étant formée de manière à permettre au repose-pied (22) de pivoter pour être déplaçable de la première position à la deuxième position ;
**caractérisée en ce que** le repose-pied (22) est fixé par un goujon de pivotement (32) qui s'étend à travers l'ouverture (34), ledit goujon (32) présentant un axe de goujon, et l'ouverture (34) étant formée de manière à permettre un mouvement de pivotement du goujon (32) autour d'un axe perpendiculaire à l'axe de goujon pour déplacer le repose-pied (22) entre les première et deuxième positions, un mouvement de rotation du goujon (32) sur l'axe de goujon facilitant le réglage de la hauteur du repose-pied (22).

2. Pédale réglable pour motocycle selon la revendication 1, dans laquelle la hauteur du repose-pied est réglable par rotation du repose-pied.

3. Pédale réglable pour motocycle selon la revendication 1 ou la revendication 2, dans laquelle la pédale est utilisée pour actionner une fonction de commande et l'élément (20) est un levier configuré pour être déplacé par le pied du motocycliste pour actionner la fonction de commande.

4. Pédale réglable pour motocycle selon la revendication 3, dans laquelle la pédale est une pédale de frein.

5. Pédale réglable pour motocycle selon la revendication 3, dans laquelle la pédale est une pédale de changement de vitesses.

6. Pédale réglable pour motocycle selon la revendication 1 ou la revendication 2 dans laquelle la pédale est un repose-pied.

7. Pédale réglable pour motocycle selon la revendication 2 ou toute revendication dépendante de la revendication 2, dans laquelle l'élément (20) comprend une rainure de clavette adjacente à l'ouverture (34), la rainure de clavette (50, 52) recevant une saillie (56) fixée au repose-pied (22), et dans laquelle la rainure de clavette est formée de manière à empêcher la rotation du repose-pied (22) lorsque le repose-pied (22) se trouve dans la première position et pour permettre la rotation du repose-pied (22) lorsque le repose-pied (22) se trouve dans la deuxième position.

8. Pédale réglable pour motocycle selon l'une quelconque des revendications précédentes, dans laquelle la deuxième direction forme un angle par rapport à la première direction compris entre 20 et 70 degrés, de préférence un angle compris entre 30 et 60 degrés, plus préférablement un angle compris entre 40 et 50 degrés et tout préférablement un angle de 45 degrés.

9. Pédale réglable pour motocycle selon l'une quelconque des revendications 3 à 5, dans laquelle le déplacement du repose-pied (22) de la première position vers la deuxième position s'effectue dans une direction différente du déplacement du levier (20) pour actionner la fonction de commande.

10. Pédale réglable pour motocycle selon l'une quelconque des revendications précédentes, comprenant en outre un ressort (26) sollicitant le repose-pied (22) vers la première position.
